# EUROPÄISCHE PATENTSCHRIFT

(11) **EP 1 272 554 B1**
(45) Veröffentlichungstag und Bekanntmachung des Hinweises auf die Patenterteilung: **19.07.2006**
(21) Anmeldenummer: 01935963.7
(22) Anmeldetag: 12.04.2001
(51) Int. Cl.: C08K 3/00, C08K 13/02, C03C 3/12, C08K 3/40, C08K 5/00

(54) **GLAS/KUNSTSTOFF-COMPOUNDS**
GLASS/PLASTIC COMPOUNDS
COMPOSITES VERRE/MATIERE PLASTIQUE

(30) Priorität: 14.04.2000 DE 10018705
(43) Veröffentlichungstag der Anmeldung: 08.01.2003
(73) Patentinhaber: SIEMENS AKTIENGESELLSCHAFT, 80333 München (DE)
(72) Erfinder: GREINER, Robert, 91083 Baiersdorf (DE); KAPITZA, Heinrich, 90765 Fürth (DE); OCHSENKÜHN, Manfred, 92348 Berg (DE)
(86) Internationale Anmeldenummer: PCT/DE2001/001460
(87) Internationale Veröffentlichungsnummer: WO 2001/079338

(56) Entgegenhaltungen:
- US-A- 5 292 690
- US-A- 5 328 874

## Beschreibung

Die Erfindung betrifft Glas/Kunststoff-Compounds auf Thermoplastbasis sowie ein Verfahren zu deren Herstellung.

In der Elektrotechnik und Elektronik werden zur Herstellung von Geräten bzw. Bauteilen verstärkte Kunststoffmaterialien eingesetzt, vor allem auf der Basis von Thermoplasten. Als verstärkte Thermoplaste dienen dabei üblicherweise glasfaserhaltige Thermoplast-Compounds.

Es ist bekannt, dass auf Isolierstoffoberflächen - infolge einer äußeren Verunreinigung der Isolation aufgrund von Staub- und Chemikalienablagerungen oder anderer Verunreinigungen - beim Anlegen einer Spannung ein Strom fließen kann, ein so genannter Kriechstrom. Bei Kunststoff-Isoliermaterialien führt dies zur Ausbildung einer leitfähigen Kriechspur auf der Kunststoffoberfläche, die auf aus der Polymermatrix entstehende thermische Abbauprodukte zurückzuführen ist. Damit geht aber die Isolierwirkung des Kunststoffs verloren. Das Spannungsniveau, bei dem eine leitfähige Kriechspur gebildet wird, ist dabei materialabhängig. Diese Erscheinung, d.h. das Auftreten von Kriechströmen und die Bildung von Kriechspuren, schränkt die Einsatzmöglichkeiten der verschiedenen Gruppen von polymeren Werkstoffen als elektrische Isolierstoffe in gewissem Umfang ein, weil für den Einsatz in der Elektrotechnik - neben einer hohen elektrischen Festigkeit - vielfach auch eine hohe Kriechstromfestigkeit gefordert werden muss.

Insbesondere bei elektrischen und elektronischen Bauteilen und Komponenten werden hohe Anforderungen an die Kriechstromfestigkeit, d.h. den CTI-Wert (CTI = Comparative Tracking Index), gestellt. So werden beispielsweise bei Relaisbauteilen für Betätiger und Kappen CTI-Werte von mindestens ≥ 125 V gefordert, meistens sogar ≥ 175 V. Für Relaisgrundkörper bei so genannter "weißer Ware" liegt diese Forderung generell bei ≥ 175 V und beim Einsatz im Automobilsektor bei mindestens ≥ 225 V. Bei anderen Anwendungen in der Elektrotechnik bzw. Elektronik, beispielsweise bei Gehäusen, können die Anforderungen sogar noch deutlich höher liegen.

Es ist bekannt, dass Hochtemperaturthermoplaste, d.h. Hochleistungsthermoplaste, abgesehen von teilaromatischen Polyamiden, nur eine ausgesprochen niedrige Kriechstromfestigkeit von ca. 100 bis 175 V besitzen. Diese niedrige Kriechstromfestigkeit kann bei der Zugabe von Verstärkungsstoffen, wie Glasfasern, sogar noch weiter absinken. Damit bleiben für die Hochtemperaturthermoplaste viele Anwendungsmöglichkeiten verschlossen.

Aufgabe der Erfindung ist es, Glas/Kunststoff-Compounds auf der Basis von Thermoplasten anzugeben, welche eine hohe Kriechstromfestigkeit aufweisen.

Dies wird erfindungsgemäß durch Glas/Kunststoff-Compounds erreicht, die folgende Komponenten enthalten:
- ein niedrigschmelzendes Sulfophosphatglas folgender Zusammensetzung (in Mol-%): 4 bis 10 % Li₂O, 4 bis 10 % Na₂O, 4 bis 8 % K₂O, 1 bis 2 % CaO, 35 bis 37 % ZnO, 0 bis 3 % La₂O₃, 19 bis 22 % P₂O₅ und 19 bis 22 % SO₃,
- einen Hochleistungsthermoplast sowie
- ein organisches Additiv und/oder einen mineralischen Füllstoff und gegebenenfalls zusätzlich
- Ruß und/oder ein sterisch gehindertes Phosphit oder Phenol.

Unter einem "niedrigschmelzenden" Sulfophosphatglas wird ein Glas mit niedriger Glasübergangstemperatur T_{g} verstanden, insbesondere ein Glas mit T_{g} < ca. 500°C. Ein "Hochleistungsthermoplast" ist ein Hochleistungskunststoff ("high-performance polymer"), und zwar im vorliegenden Fall ein hochtemperaturbeständiger Kunststoff ("heat-resistant polymer", "high-temperature resistant polymer"). Dies ist deshalb wichtig, weil sowohl die Temperatur bei der Herstellung der Compounds als auch die Verarbeitungstemperatur (der Compounds) > 300°C beträgt.

Die Glas/Kunststoff- bzw. Glas/Polymer-Compounds nach der Erfindung besitzen eine hohe Kriechstromfestigkeit: Der CTI-Wert kann bis zu 250 V und mehr betragen. Dadurch eröffnet sich für die neuen Hochleistungscompounds ein breites Anwendungsfeld bei elektrotechnischen und elektronischen Bauteilen und Komponenten, d.h. ein erweiterter Einsatzbereich. Wesentlich ist auch, dass die hohe Kriechstromfestigkeit bereits mit vergleichsweise geringen Mengen an Zusatzstoffen erreicht wird, was sich sehr positiv auf die Fließfähigkeit und die mechanischen Eigenschaften auswirkt.

In der WO-A-0144360 sind Glas/Kunststoff-Compounds auf Thermoplastbasis beschrieben, welche folgende Komponenten enthalten:
- ein niedrigschmelzendes Sulfophosphatglas folgender Zusammensetzung (in Mol-%): 4 bis 10 % Li₂O, 4 bis 10 % Na₂O, 4 bis 8 % K₂O, 1 bis 2 CaO, 35 bis 37 % ZnO, 0 bis 3 % La₂O₃, 19 bis 22 % P₂O₅ und 19 bis 22 % SO₃ sowie
- einen Hochleistungsthermoplast.

Im Vergleich zu diesen Compounds zeigen die Glas/Kunststoff-Compounds nach der Erfindung, welche ein organisches Additiv und/oder einen mineralischen Füllstoff enthalten, eine Erhöhung des CTI-Wertes um 50 bis 100 V. Weisen diese Compounds zusätzlich noch Ruß und/oder ein sterisch gehindertes Phosphit oder Phenol auf, so wird die Kriechstromfestigkeit nochmals gesteigert, und zwar auf CTI-Werte ≥ 250 V.

Die Glas/Kunststoff-Compounds nach der Erfindung zeigen - neben der verbesserten Kriechstromfestigkeit - ferner gute mechanische und thermische Eigenschaften sowie gute Verarbeitungseigenschaften, insbesondere eine gute Fließfähigkeit, auch bei hohem Füllstoff-, d.h. hohem Glasgehalt. Sie zeichnen sich außerdem durch eine hervorragende Chemikalienbeständigkeit aus, insbesondere gegenüber Wasser, Säuren und Basen, und zwar überraschenderweise ohne den Zusatz von Stabilisatoren. Diese Glas/Kunststoff-Compounds besitzen darüber hinaus eine ausgezeichnete Abriebfestigkeit, und ein Materialrecycling ist problemlos möglich, weil keine Verkürzung der Glaskomponente erfolgt, wie dies bei glasfaserverstärkten Compounds der Fall ist.

Die in den Glas/Kunststoff-Compounds nach der Erfindung enthaltenen Sulfophosphatgläser weisen eine Glasübergangstemperatur von 250°C ≤ T_{g} ≤ 280°C auf. Vorzugsweise findet in den Compounds ein Sulfophosphatglas folgender Zusammensetzung (in Mol-%) Verwendung: 4,9 % Li₂O, 9,4 % Na₂O, 7,1 % K₂O, 1,6 % CaO, 36,6 % ZnO, 20,0 % P₂O₅ und 20,4 % SO₃. Ein derartiges Glas besitzt eine Glasübergangstemperatur von 268°C. Ein anderes Glas weist beispielsweise folgende Zusammensetzung auf (in Mol-%): 9 % Li₂O, 5 % Na₂O, 7 % K₂O, 1,6 % CaO, 37 % ZnO, 20,4 % P₂O₅ und 20 % SO₃ (T_{g} = 280°C). Ein weiteres Glas hat beispielsweise folgende Zusammensetzung (in Mol-%): 4,8 % Li₂O, 9,2 % Na₂O, 6,9 % K₂O, 1,6 % CaO, 35,9 % ZnO, 2,0 % La₂O₃, 19,6 % P₂O₅ und 20,0 % SO₃ (Tg = 275°C).

Als Hochleistungsthermoplast dient vorteilhaft ein Polyetheretherketon (PEEK), ein Polyetherimid (PEI), ein Polyphenylensulfid (PPS), ein teilaromatisches Polyamid, wie Polyphthalamid (PPA), oder ein flüssigkristallines Polymer (LCP). Bei diesen Polymeren ist die Glasübergangstemperatur der Glaskomponente der Verarbeitungstemperatur des Thermoplastmaterials angepasst. Weitere einsetzbare Hochleistungsthermoplaste sind Polyaryletherketone (PAEK) allgemein, beispielsweise Polyetherketone (PEK), sowie Polysulfone (PSU), insbesondere Polyethersulfone (PES) und Polyphenylensulfone (PPSU).

Der Anteil der Glas/Kunststoff-Compounds an der Glaskomponente, d.h. am Sulfophosphatglas, beträgt vorzugsweise 15 bis 60 Gew.-%, bezogen auf den Anteil an Sulfophosphatglas und Hochleistungsthermoplast. Für bestimmte Anwendungen kann der Glasanteil aber bis zu 80 Gew.-% betragen. Die Compounds können auch übliche Additive enthalten, wie Farbpigmente und Stabilisatoren. Anwendungsmöglichkeiten bestehen beispielsweise bei Sensoren, Aktoren, Steckverbindern und Relais.

Das organische Additiv ist vorzugsweise Melamincyanurat, ein Polysiloxan oder ein halogeniertes Flammschutzmittel, wie Poly(haloaryl-(meth)acrylat) und halogeniertes Polystyrol. Weitere einsetzbare Additive sind Elastomere, beispielsweise olefinische Elastomere, Kautschuke, Polyamide, Fluorpolymere und Organosilane, wie 3-Mercaptopropyl-trimethoxysilan.

Der mineralische Füllstoff ist vorzugsweise Glimmer, Calciumsulfat (CaSO₄) oder ein Zinkborat, wie 4ZnO·B₂O₃·H₂O. Als Füllstoff kommen aber auch Magnesiumhydroxid, Aluminiumhydroxid, Aluminiumborate, Bariumsulfat, Antimontrioxid, Titandioxid, Calciumphosphat, Pyrophosphate, insbesondere Natrium- und Kaliumpyrophosphat, Ammoniumpolyphosphate und Talkum infrage.

Der Anteil der Glas/Kunststoff-Compounds an organischem Additiv und/oder mineralischem Füllstoff beträgt vorteilhaft 5 bis 40 Gew.-%, insbesondere 5 bis 15 Gew.-%, jeweils bezogen auf das Gesamtgewicht. Der Anteil an Ruß beträgt vorteilhaft 0,1 bis 1,0 Gew.-%, insbesondere 0,2 bis 0,5 Gew.-%, und der Anteil an sterisch gehindertem Phosphit bzw. Phenol 0,5 bis 1,5 Gew.-%, insbesondere ca. 1 Gew.-%, jeweils bezogen auf das Gesamtgewicht.

Geeignete Phosphite, d.h. Ester der phosphorigen Säure, sind beispielsweise Verbindungen, wie Tris-(2,4-di-tert.-butylphenyl)-phosphit. Geeignete Phenole sind beispielsweise (3,5-Di-tert.-butyl-4-hydroxyphenyl)-propionsäureester, wie die entsprechenden Propionate von Octadecanol und Pentaerythrit.

Die Herstellung der Glas/Kunststoff-Compounds nach der Erfindung erfolgt in der Weise, dass aus den beiden Komponenten Sulfophosphatglas und Hochleistungsthermoplast zunächst - bei erhöhter Temperatur - ein Masterbatch mit einem Glasgehalt von 60 bis 90 Gew.-% hergestellt wird. Dabei wurde überraschenderweise gefunden, dass bei der Verwendung von Glaspartikeln (Glaskörner) mit einem Durchmesser ≤ 1,5 mm im Masterbatch Glasstrukturen im µm- und sub-µm-Bereich erhalten werden, die gleichmäßig verteilt sind.

Die Weiterverarbeitung erfolgt dann - in einer zweiten Verfahrensstufe - in der Weise, dass durch Zugabe von weiterem Hochleistungsthermoplast zum Masterbatch - bei erhöhter Temperatur - der Glasgehalt auf 15 bis 60 Gew.-% verringert wird. Die Struktur und die homogene Verteilung der Glaspartikel werden dabei nicht beeinflusst, d.h. sie bleiben erhalten. Bei Kontrollexperimenten zeigte sich überraschenderweise, dass Strukturgröße und -verteilung der beschriebenen Art nicht erhalten werden, wenn unmittelbar von einem Batch beispielsweise mit einem Glasanteil von 15 % ausgegangen wird. Gleichmäßig verteilte Glasstrukturen, sogar im nm-Bereich, lassen sich vielmehr nur ausgehend von einem Masterbatch mit einem hohen Anteil des speziellen Sulfophosphatglases in einem Hochleistungsthermoplast realisieren.

Bei der zweiten Verfahrensstufe wird gleichzeitig auch ein organisches Additiv und/oder ein mineralischer Füllstoff zugegeben. Gegebenenfalls kann ferner Ruß und/oder ein sterisch gehindertes Phosphit oder Phenol zugesetzt werden.

Die Glas/Kunststoff-Compounds nach der Erfindung werden bei erhöhter Temperatur hergestellt, vorzugsweise bei etwa 320 bis 420°C. Bei der Herstellung der Compounds ist es auch möglich, die Struktur der Glaspartikel (isotrop/anisotrop) durch die Verarbeitungsbedingungen einzustellen. Die Compounds zeichnen sich außerdem durch eine gute Anbindung der Glaskomponente an das Thermoplastmaterial aus, wie insbesondere die gute Chemikalienbeständigkeit zeigt.

Da von relativ groben Partikeln eines Sulfophosphatglases ausgegangen werden kann, die Partikelgröße beträgt ≤ 4 mm, vorzugsweise ≤ 1,5 mm, bietet das Verfahren nach der Erfindung somit die Möglichkeit, auch solche Glas/Kunststoff-Compounds preisgünstig herzustellen, bei denen die Glaspartikel in einem Hochleistungsthermoplast gleichmäßig und homogen verteilt sind und außerdem bis in den nm-Bereich gezielt eingestellt werden können. Dies erfolgt über die Viskosität der Einzelkomponenten und über die Verarbeitungsbedingungen, insbesondere die Verarbeitungstemperatur; das Viskositätsverhältnis von Kunststoff zu Glas beträgt im allgemeinen etwa 1:1000. Derartige Compounds eignen sich insbesondere zur Herstellung von Geräten und Bauteilen für die Elektrotechnik bzw. Elektronik. Dabei werden nämlich die wesentlichen Anforderungen bezüglich der Material- und Verarbeitungseigenschaften abgedeckt und es wird ein störungsfreier Betrieb gewährleistet. Die Compounds ermöglichen bei Geräten und Bauteilen der Elektrotechnik bzw. Elektronik außerdem eine deutliche Reduzierung der Materialvielfalt, insbesondere bei den Kunststoffen, bis hin zur Sortenreinheit. Dies ermöglicht ein kostengünstiges Materialrecycling, und zwar unter Erhalt der Füllstoffeigenschaften.

Anhand von Ausführungsbeispielen soll die Erfindung noch näher erläutert werden. Das dabei verwendete Sulfophosphatglas weist folgende Zusammensetzung auf (in Mol-%): 4,9 % Li₂O, 9,4 % Na₂O, 7,1 % K₂O, 1,6 % CaO, 36,6 % ZnO, 20,0 % P₂O₅ und 20,4 % SO₃.

### Beispiel 1

### (a) Herstellung eines Masterbatch

Die Masterbatch-Herstellung erfolgt bevorzugt auf einem gleichlaufenden oder auch auf einem gegenläufigen Doppelschneckenextruder mit 11 separaten Zylinderheizzonen (Zylinderzone 1: Einfülltrichter; Zylinderzone 11: Düse). Die Schnecken sind derart konzipiert, dass in den Zylinderheizzonen 3 bis 5 mehrere Knet- und Scherblöcke sowie Stauscheiben eingebaut sind. Die Zonen 6 bis 9 sind mit Dispergierelementen bestückt, die Zonen 10 und 11 enthalten Förderelemente.

Die verwendeten Kunststoffe liegen entweder in Pulver- oder in Granulatform vor (Linsengranulat oder Zylindergranulat mit einer Länge von 3 bis 4 mm und einem Durchmesser von 2 bis 5 mm); das Glas hat eine Körnung von ≤ 1,5 mm. Bei der Verwendung von Kunststoffpulver wird zunächst eine Trockenmischung (Vormischung) im entsprechenden Verhältnis von Glas (60 bis 90 %) zu Kunststoff (40 bis 10 %) aufbereitet, die dann in die Hauptdosierung (Einfülltrichter) des Extruders dosiert wird. Bei der Verwendung von Kunststoffgranulat werden beide Komponenten über Dosiersysteme anteilsmäßig in den Einfülltrichter dosiert. In dieser Weise kann auch bei der Verwendung von Kunststoffpulver vorgegangen werden. Weiterhin besteht die Möglichkeit, das Kunststoffpulver bzw. -granulat in den Einfülltrichter des Extruders zu dosieren und das Glas über eine Seitendosierung in den Zylinderzonen 3 bis 5. Sowohl das Glas als auch der Kunststoff bzw. die Trockenmischung werden vor der Verarbeitung mindestens 4 h bei 100 bis 150°C gut vorgetrocknet. Der Compound wird durch eine Lochdüse ausgetragen, in einem sich anschließenden Wasserbad abgekühlt und dann in einem Granulator zerkleinert. Bei sehr hohen Glasanteilen empfiehlt sich die Verwendung eines Heißabschlages.

### (b) Herstellung von Glas/Kunststoff-Compounds

Mittels des beschriebenen Doppelschneckenextruders erfolgt eine Verringerung des Glasgehaltes im Masterbatch. Der endgültige Glasgehalt von 15 bis 60 Gew.-% kann auf zweierlei Weise eingestellt werden:
(i) Masterbatch-Granulat und Basismaterial werden anteilmäßig abgewogen, entsprechend dem einzustellenden endgültigen Glasgehalt, und in einer Trockenmischung aufbereitet. Diese Trockenmischung wird in den Einfülltrichter des Extruders dosiert. Die Herstellung des endgültigen Compounds erfolgt somit in einem zweiten Extruderdurchlauf.
(ii) Die Herstellung erfolgt im gleichen Extruderdurchlauf zusammen mit der Masterbatch-Herstellung, indem über einen zweiten Seitendosierer in den Zylinderzonen 6 bis 9 Basismaterial - entsprechend dem einzustellenden Glasanteil - zudosiert wird. Zur Herstellung des endgültigen Compounds ist somit nur ein Extruderdurchlauf erforderlich.

Die Variante (ii) wird dabei bevorzugt, weil die Materialien nur einmal der Temperaturbelastung im Aufbereitungsprozess ausgesetzt sind und damit ein übermäßiger molekularer Abbau des Basismaterials vermieden wird.

Bei der Variante (i) liegt das Zylindertemperaturprofil in den Zonen 3 bis 11 jeweils etwa um 15 bis 20°C unter dem entsprechenden Temperaturprofil nach (a).

Gleichzeitig mit dem Basismaterial (zur Verringerung des Glasgehaltes) werden dem Masterbatch auch sämtliche Zusatzstoffe zugegeben, d.h. organisches Additiv und/oder mineralischer Füllstoff sowie gegebenenfalls Ruß und/oder sterisch gehindertes Phosphit oder Phenol.

Es werden Glas/Kunststoff-Compounds folgender Zusammensetzung hergestellt (Masseteile):

| Compound | PPS | Glas | Ruß | CaSO₄ | Glimmer | Zinkborat |
|---|---|---|---|---|---|---|
| 1 | 60 | 40 | 0,3 | 15 | - | - |
| 2 | 60 | 40 | 0,5 | - | 10 | - |
| 3 | 60 | 40 | 0,3 | - | - | 5 |

### Beispiel 2

Kriechstromfestigkeit

Aus den Compounds werden durch Spritzgießen Probekörper in Form ebener Platten mit einer Mindestabmessung von 15 mm x 15 mm und einer Mindestdicke von 3 mm hergestellt. Die Prüfung der Kriechstromfestigkeit erfolgt nach DIN VDE 0303 Teil 1 (id. IEC 112, Comparative tracking index CTI).

### Prüfanordnung:

Zwei 5 mm breite und 2 mm dicke, unter einem Winkel von 30° schrägkantig bearbeitete Platinelektroden werden symmetrisch zu einer senkrechten Ebene angeordnet, so dass der Winkel zwischen ihnen 60° beträgt; die einander gegenüber stehenden Flächen stehen senkrecht und ihr Abstand auf einer ebenen waagrechten Fläche beträgt 4 mm. Vorhanden sind eine Spannungsquelle, ein Spannungsmesser und eine Überstromauslösung (0,5 A nach 2 s) sowie Tropfengeber für zwei Prüflösungen. Prüflösung A: 0,1 Gew.-% NH₄Cl in destilliertem Wasser; Prüflösung B: 0,1 Gew.-% NH₄Cl und 0,5 Gew.-% Natriumsalz der Diisobutyl-naphthalinsulfonsäure in destilliertem Wasser.

### Ermittlung des CTI-Wertes:

Der CTI-Wert ist der Zahlenwert der höchsten Spannung, bei der an fünf Stellen der Probe nach jeweils 50 Tropfungen (im 30 s-Rhythmus) kein Ausfall (Überstromrelais löst aus), d.h. kein Kriechweg entsteht (z.B. CTI 425), und zwar unter der Voraussetzung, dass bei der Prüfung einer weiteren Probe an fünf Stellen mit einer um 25 V niedrigeren Spannung kein Ausfall bei weniger als 100 Auftropfungen auftritt. Wird diese Zusatzbedingung nicht erfüllt, so wird die höchste Spannung ermittelt, bei der fünf Stellen 100 oder mehr Auftropfungen widerstehen, und dieser Wert wird zusätzlich angegeben, z.B. CTI 425 (375).

Bei dieser Prüfung ergeben sich folgende CTI-Werte:
Compound 1: 225 V;
Compound 2: 250 V;
Compound 3: 250 V.

## Patentansprüche

1. Glas/Kunststoff-Compounds auf Thermoplastbasis, enthaltend
- ein Sulfophosphatglas mit T_{g} < ca. 500°C folgender Zusammensetzung: 4 bis 10 % Li₂O, 4 bis 10 % Na₂O, 4 bis 8 % K₂O, 1 bis 2 % CaO, 35 bis 37 % ZnO, 0 bis 3 % La₂O₃, 19 bis 22 % P₂O₅ und 19 bis 22 % SO₃,
- einen hochtemperaturbeständiger Kunststoff mit einer Temperaturbeständigkeit über 300°C sowie
- ein organisches Additiv und/oder einen mineralischen Füllstoff und gegebenenfalls zusätzlich
- Ruß und/oder ein sterisch gehindertes Phosphit oder Phenol.

2. Glas/Kunststoff-Compounds nach Anspruch 1, **dadurch gekennzeichnet, dass** sie ein Sulfophosphatglas folgender Zusammensetzung enthalten: 4,9 % Li₂O, 9,4 % Na₂O, 7,1 % K₂O, 1,6 % CaO, 36,6 % ZnO, 20,0 % P₂O₅ und 20,4 % SO₃.

3. Glas/Kunststoff-Compounds nach Anspruch 1 oder 2, **dadurch gekennzeichnet, dass** der Hochleistungsthermoplast ein Polyetheretherketon, ein Polyetherimid, ein Polyphenylensulfid, ein teilaromatisches Polyamid oder ein flüssigkristallines Polymer ist.

4. Glas/Kunststoff-Compounds nach einem der Ansprüche 1 bis 3, **dadurch gekennzeichnet, dass** das organische Additiv Melamincyanurat, ein Polysiloxan oder ein halogeniertes Flammschutzmittel ist.

5. Glas/Kunststoff-Compounds nach einem oder mehreren der Ansprüche 1 bis 4, **dadurch gekennzeichnet, dass** der mineralische Füllstoff Glimmer, Calciumsulfat oder Zinkborat ist.

6. Glas/Kunststoff-Compounds nach einem oder mehreren der Ansprüche 1 bis 5, **dadurch gekennzeichnet, dass** der Anteil an Sulfophosphatglas 15 bis 60 Gew.-% beträgt, bezogen auf den Anteil an Sulfophosphatglas und Hochleistungsthermoplast.

7. Glas/Kunststoff-Compounds nach einem oder mehreren der Ansprüche 1 bis 6, **dadurch gekennzeichnet, dass** der Anteil an organischem Additiv und/oder mineralischem Füllstoff 5 bis 40 Gew.-% beträgt, bezogen auf das Gesamtgewicht.

8. Glas/Kunststoff-Compound nach einem oder mehreren der Ansprüche 1 bis 7, **dadurch gekennzeichnet, dass** der Anteil an Ruß 0,1 bis 1,0 Gew.-% beträgt, bezogen auf das Gesamtgewicht.

9. Glas/Kunststoff-Compound nach einem oder mehreren der Ansprüche 1 bis 8, **dadurch gekennzeichnet, dass** der Anteil an Phosphit bzw. Phenol 0,5 bis 1,5 Gew.-% beträgt, bezogen auf das Gesamtgewicht.

10. Verfahren zur Herstellung von Glas/Kunststoff-Compounds nach einem oder mehreren der Ansprüche 1 bis 9, **dadurch gekennzeichnet, dass** in einem ersten Schritt aus einem Sulfophosphatglas und einem Hochleistungsthermoplast bei erhöhter Temperatur ein Masterbatch mit einem Gehalt an Glas von 60 bis 90 Gew.-% hergestellt wird, und dass in einem zweiten Schritt der Glasgehalt durch Zugabe von weiterem Hochleistungsthermoplast bei erhöhter Temperatur auf 15 bis 60 Gew.-% verringert wird, wobei gleichzeitig ein organisches Additiv und/oder ein mineralischer Füllstoff sowie gegebenenfalls Ruß und/oder ein sterisch gehindertes Phosphit oder Phenol zugesetzt wird.

## Claims

1. Glass/plastic compounds based on thermoplastic and containing
- a sulphophosphate glass with T_{g} < approx. 500°C of the following composition: 4 to 10% of Li₂O, 4 to 10% of Na₂O, 4 to 8% of K₂O, 1 to 2% of CaO, 35 to 37% of ZnO, 0 to 3% of La₂O₃, 19 to 22% of P₂O₅ and 19 to 22% of SO₃,
- a high-temperature-resistant plastic which is thermally stable to over 300°C, and
- an organic additive and/or a mineral filler, and if appropriate also
- carbon black and/or a sterically hindered phosphite or phenol.

2. Glass/plastic compounds according to Claim 1, **characterized in that** they contain a sulphophosphate glass of the following composition: 4.9% of Li₂O, 9.4% of Na₂O, 7.1% of K₂O, 1.6% of CaO, 36.6% of ZnO, 20.0% of P₂O₅ and 20.4% of SO₃.

3. Glass/plastic compounds according to Claim 1 or 2, **characterized in that** the high-performance thermoplastic is a polyether ether ketone, a polyetherimide, a polyphenylene sulphide, a partially aromatic polyamide or a liquid-crystal polymer.

4. Glass/plastic compounds according to one of Claims 1 to 3, **characterized in that** the organic additive is melamine cyanurate, a polysiloxane or a halogenated flame retardant.

5. Glass/plastic compounds according to one or more of Claims 1 to 4, **characterized in that** the mineral filler is mica, calcium sulphate or zinc borate.

6. Glass/plastic compounds according to one or more of Claims 1 to 5, **characterized in that** the level of sulphophosphate glass is 15 to 60% by weight, based on the level of sulphophosphate glass and high-performance thermoplastic.

7. Glass/plastic compounds according to one or more of Claims 1 to 6, **characterized in that** the level of organic additive and/or mineral filler is 5 to 40% by weight, based on the total weight.

8. Glass/plastic compound according to one or more of Claims 1 to 7, **characterized in that** the level of carbon black is 0.1 to 1.0% by weight, based on the total weight.

9. Glass/plastic compound according to one or more of Claims 1 to 8, **characterized in that** the level of phosphite or phenol is 0.5 to 1.5% by weight, based on the total weight.

10. Process for producing glass/plastic compounds according to one or more of Claims 1 to 9, **characterized in that** in a first step, at elevated temperature, a masterbatch with a glass content of 60 to 90% by weight is produced from a sulphophosphate glass and a high-performance thermoplastic, and **in that** in a second step the glass content is reduced to 15 to 60% by weight by adding further high-performance thermoplastic at elevated temperature, with an organic additive and/or a mineral filler and, if appropriate, carbon black and/or a sterically hindered phosphite or phenol being added at the same time.

## Revendications

1. Matériaux composites verre/matière plastique à base d'un matériau thermoplastique qui contiennent
- un verre sulfophosphate ayant une T_{g} < à environ 500°C et ayant la composition suivante : 4 à 10 % de Li₂O, 4 à 10 % de Na₂O, 4 à 8 % de K₂O, 1 à 2 % de CaO, 35 à 37 % de ZnO, 0 à 3 % de La₂O₃, 19 à 22 % de P₂O₅ et 19 à 22 % de SO₃,
- une matière plastique résistant aux températures élevées, ayant une résistance à la température supérieure à 300°C, ainsi que
- un additif organique et/ou une charge minérale et éventuellement en outre
- du noir de fumée et/ou un phosphite ou phénol présentant un encombrement s'térique.

2. Matériaux composites verre/matière plastique selon la revendication 1, **caractérisés en ce qu'**ils contiennent un verre ayant la composition suivante : 4,9 % de Li₂O, 9,4 % de Na₂O, 7,1 % de K₂O, 1,6 % de CaO, 36,6 % de ZnO, 20,0 % de P₂O₅ et 20,4 % de SO₃.

3. Matériaux composites verre/matière plastique selon la revendication 1 ou 2, **caractérisés en ce que** la matière thermoplastique haute performance est une polyétheréther-cétone, un polyétherimide, un sulfure de polyphénylène, un polyamide partiellement aromatique ou un polymère cristallin liquide.

4. Matériaux composites verre/matière plastique selon l'une quelconque des revendications 1 à 3, **caractérisés en ce que** l'additif organique est un cyanurate de mélamine, un polysiloxane ou un ignifugeant halogéné.

5. Matériaux composites verre/matière plastique selon l'une ou plusieurs des revendications 1 à 4, **caractérisés en ce que** la charge minérale est du mica, du sulfate de calcium ou du borate de zinc.

6. Matériaux composites verre/matière plastique selon l'une ou plusieurs des revendications 1 à 5, **caractérisés en ce que** la teneur en verre sulfophosphate est de 15 à 60 % en poids, par rapport à la teneur totale en verre sulfophosphate et en matière thermoplastique haute performance.

7. Matériaux composites verre/matière plastique selon l'une ou plusieurs des revendications 1 à 6, **caractérisés en ce que** la teneur en additif organique et/ou en charge minérale est de 5 à 40 % en poids, par rapport au poids total.

8. Matériaux composites verre/matière plastique selon l'une ou plusieurs des revendications 1 à 7, **caractérisés en ce que** la teneur en noir de fumée est de 0,1 à 1,0 % en poids, par rapport au poids total.

9. Matériaux composites verre/matière plastique selon l'une ou plusieurs des revendications 1 à 8, **caractérisés en ce que** la teneur en phosphite ou phéncil est de 0,5 à 1,5 % en poids, par rapport au poids total.

10. Procédé de préparation de matériaux composites verre/matière plastique selon l'une ou plusieurs des revendications 1 à 9, **caractérisé en ce que** dans une première étape, on prépare, à température élevée, à partir d'un verre sulfophosphate et d'une matière thermoplastique haute performance, un mélange-maître ayant une teneur en verre de 60 à 90 % en poids, et au cours d'une seconde étape, on réduit la teneur en verre par addition au mélange-maître d'une quantité supplémentaire de matière thermoplastique haute performance, à température élevée, de façon à obtenir une teneur de 15 à 60 % en poids, en ajoutant simultanément un additif organique et/ou une charge minérale ainsi qu'éventuellement du noir de fumée et/ou un phosphite ou un phénol présentant un encombrement stérique.
